# EUROPEAN PATENT APPLICATION

(11) **EP 4 793 598 A1**
(43) Date of publication of application: **19.08.2026**
(21) Application number: 25210124.1
(22) Date of filing: 21.10.2025
(51) Int. Cl.: G01C 21/30, G01C 21/36, G01C 21/00, G06V 20/58, G06V 20/56

(54) **LOCALIZATION-BASED STATIC ENVIRONMENTAL MODEL GENERATION**

(30) Priority: 23.10.2024 US 202418924623
(71) Applicant: Atieva, Inc., Newark, CA 94560 (US)
(72) Inventor: Zhou, Tony, Westland, 48185 (US); Xin, Junjun, Campbell, 95008 (US); Yang, Zongming, San Jose, 95133 (US); Mishra, Utkarsh Ranjan, Fremont, 94560 (US); Lee, Eugene, Newark, 94560 (US)
(74) Representative: Daub, Thomas

(57) **Abstract**

Vehicles, systems and methods for performing environmental model generation are disclosed. In embodiments, the automotive vehicle includes: an interior display screen; a vehicle navigation system having a memory and one or more processors. The one or more processors are configured to: generate, using a first pipeline, a first set of outputs that includes traffic sign recognition results based on lane-level localization information for the vehicle; generate, using a second pipeline, a second set of outputs containing lane sensing results based on lane-level localization information for the vehicle; responsive to the first and second sets of outputs, create an environmental model (EM) based on lane-level localization information, the traffic sign recognition results and the lane sensing results; and construct a representation of the vehicle's surroundings for display on the interior display screen using the model.

## Description

### FIELD

Embodiments disclosed herein relate generally to a vehicle, and more particularly, to a method and apparatus for performing static object detection and localization for vehicles.

### BACKGROUND

Global Navigation Satellite Systems (GNSS) such as Global Positioning System (GPS) technology is widely used as a means for locating an automobile vehicle upon a roadway. As autonomous and semi-autonomous vehicles become more advanced, accurately knowing the vehicle's position in a lane of the roadway becomes critical. However, GPS technology may be inaccurate (due to a weak signal) or unavailable in urban areas due to the GPS signal being blocked by objects or buildings. Achieving an assisted or fully autonomous self-driving vehicle requires a system to determine the vehicle's lateral position within a lane of the roadway with precision even in the absence of a GPS signal. Additionally, advanced driver-assistance systems (ADAS) benefit greatly from this ability. For example, lane keeping assistance (LKA) systems, lane departure warning (LDW) systems, and lane change assistance systems are benefited by accurately knowing the vehicle's lateral position within the lane.

Traditional pixel-based lane detection methods struggle with variable lighting, low contrast lane markings, occlusions, road surface irregularities, and distinguishing between different types of lane markings, especially under adverse weather conditions or in areas with unconventional marking practices. Challenges also arise from high road curvature, dynamic scene changes, non-standard markings, camera calibration issues, and interference from reflections.

AI-based lane detection systems, while advanced, face significant challenges including data dependency, requiring extensive and diverse datasets for training, which can be costly and time-consuming to collect. They may struggle with generalization, performing poorly in unencountered scenarios such as new lane markings or road layouts. Adapting to dynamic environments also poses a challenge, as these systems can find it difficult to respond to sudden changes like weather shifts or accidents that alter usual road patterns. Additionally, integrating data from various sensors like cameras, LiDAR, and radar to improve detection accuracy introduces complexity in data alignment and interpretation. Despite these hurdles, the pursuit of enhancing road safety and enabling autonomous driving technologies motivates ongoing research to address these issues.

Current lane detection systems primarily adhere to Quality Management (QM) safety levels, lacking the robust safety mechanisms and fault tolerance required for ASIL B or ASIL D standards. This limits their reliability in critical situations and their suitability for safety-critical applications like autonomous driving, which demand higher levels of redundancy and operational integrity.

### BRIEF SUMMARY

Vehicles, systems and methods for performing environmental model generation are disclosed. In some embodiments, the automotive vehicle includes: an interior display screen; a vehicle navigation system having a memory and one or more processors. The one or more processors are configured to: generate, using a first pipeline, a first set of outputs that includes traffic sign recognition results based on lane-level localization information for the vehicle; generate, using a second pipeline, a second set of outputs containing lane sensing results based on lane-level localization information for the vehicle; responsive to the first and second sets of outputs, create an environmental model (EM) based on lane-level localization information, the traffic sign recognition results and the lane sensing results; and construct a representation of the vehicle's surroundings for display on the interior display screen using the model.

### BRIEF DESCRIPTION OF THE DRAWINGS

The present invention is illustrated by way of example and not limitation in the figures of the accompanying drawings in which like references indicate similar elements.
FIG. 1 illustrates system level diagram of a navigation system of a vehicle according to some embodiments of the disclosure.
FIG. 2A illustrates some embodiments of a system for performing static object detection and localization.
FIG. 2B illustrates some other embodiments of a system for performing static object detection and localization.
FIG. 3 is a data flow diagram of some embodiments of a process for performing lane sensing.
FIG. 4 illustrates an example of some embodiments of an encoder-decoder architecture.
FIG. 5 illustrates an alignment between the open-street-map (OSM) and camera lane.
FIG. 6 is a data flow diagram of some embodiments of a process for updating the location of a vehicle navigating a road.
FIG. 7 illustrates some embodiments of a process for performing AI based traffic sign image recognition.
FIG. 8 is a data flow diagram illustrating some other embodiments of a process for performing traffic sign recognition.
FIG. 9 is a data flow diagram of some embodiments of a process for performing traffic sign recognition.
FIG. 10 a data flow diagram illustrating some embodiments of a process for generating an environmental model (EM).
FIG. 11 illustrates some embodiments of a system architecture with the two pipelines.
FIG. 12 is a data flow diagram of a probabilistic assignment algorithm operating with the EM module.
FIG. 13 is a data flow diagram of some embodiments of a process for generating an environmental model.

### DETAILED DESCRIPTION

In the following description, numerous specific details are set forth to provide thorough explanation of embodiments of the present invention. It will be apparent, however, to one skilled in the art, that embodiments of the present invention may be practiced without these specific details. In other instances, well-known components, structures, and techniques have not been shown in detail in order not to obscure the understanding of this description.

Reference in the specification to "some embodiments" or "an embodiment" or "example" or "implementation" means that a particular feature, structure, or characteristic described in connection with the embodiment can be included in at least some embodiments of the invention. The appearances of the phrase "in some embodiments" in various places in the specification do not necessarily all refer to the same embodiment.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

The processes depicted in the figures that follow, are performed by processing logic that comprises hardware (e.g., a processor, circuitry, dedicated logic, etc.), software (such as is run on a general-purpose computer system or a dedicated machine), or a combination of both. Although the processes are described below in terms of some sequential operations, it should be appreciated that some of the operations described may be performed in different order. Moreover, some operations may be performed in parallel rather than sequentially.

As used herein, the singular forms "a", "an" and "the" are intended to include the plural forms as well, unless the context clearly indicates otherwise. The terms "comprises", "comprising", "includes", and/or "including", as used herein, specify the presence of stated features, process steps, operations, elements, and/or components, but do not preclude the presence or addition of one or more other features, process steps, operations, elements, components, and/or groups thereof. As used herein, the term "and/or" and the symbol "/" are meant to include any and all combinations of one or more of the associated listed items. Additionally, while the terms first, second, etc. may be used herein to describe various steps, calculations, or components, these steps, calculations, or components should not be limited by these terms, rather these terms are only used to distinguish one step, calculation, or component from another. For example, a first calculation could be termed a second calculation, and, similarly, a first step could be termed a second step, and, similarly, a first component could be termed a second component, without departing from the scope of this disclosure. The terms "electric vehicle" and "EV" may be used interchangeably and refer to an all-electric vehicle. The terms "location" and "position" may be used interchangeably.

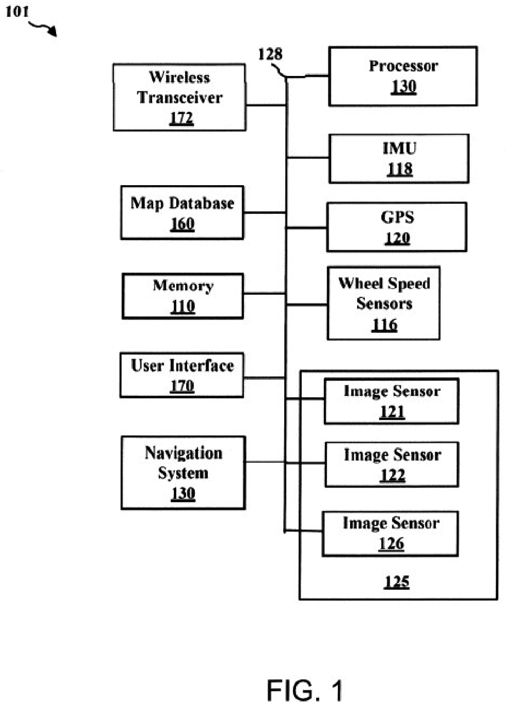

FIG. 1 is a high-level view of some embodiments of a system controller 101 within a vehicle. The vehicle can be an electric vehicle (EV), a vehicle utilizing an internal combustion engine (ICE), or a hybrid vehicle, where a hybrid vehicle utilizes multiple sources of propulsion including an electric drive system. The vehicle includes a system controller 101, which is comprised of a processor 130 (e.g., a central processing unit (CPU)). System controller 101 also includes memory 110, with memory 110 being comprised of EPROM, EEPROM, flash memory, RAM, solid state drive, hard disk drive, or any other type of memory or combination of memory types. A user interface 170 is coupled to system controller 101. User interface 170 allows the driver, or a passenger, to interact with the system controller 101, for example inputting data into the navigation system 130, altering the heating, ventilation and air conditioning (HVAC) system via the thermal management system, controlling the vehicle's entertainment system (e.g., radio, CD/DVD player, etc.), adjusting vehicle settings (e.g., seat positions, light controls, etc.), and/or otherwise altering the functionality of the vehicle. In at least some embodiments, user interface 170 also includes means for the vehicle management system to provide information to the driver and/or passenger, information such as a navigation map database 160 or driving instructions (e.g., via the navigation system 130 and/or GPS 120) as well as the operating performance of any of a variety of vehicle systems (e.g., battery pack charge level for an EV, fuel level for an ICE-based or hybrid vehicle, selected gear, current entertainment system settings such as volume level and selected track information, external light settings, current vehicle speed (e.g., via wheel speed sensors 116), current HVAC settings such as cabin temperature and/or fan settings, etc.) via the thermal management system. User interface 170 can also be used to warn the driver of a vehicle condition (e.g., low battery charge level or low fuel level) and/or communicate an operating system malfunction (battery system not charging properly, low oil pressure for an ICE-based vehicle, low tire air pressure, etc.).

System controller 101 can use data received from an external on-line source that is coupled to the controller via wireless transceiver 172 (using, for example, GSM, EDGE, UMTS, CDMA, WiFi, LTE, 5G, 6G, etc.). For example, in some embodiments, system controller 101 can receive position information via wireless transceiver 172 based on triangulation of wireless signals from multiple base stations. In some embodiments, system controller 101 can receive updated maps via wireless transceiver 172 for storing in map database 160.

System controller 101 can include an inertial measurement unit (IMU) 118, which can be an electronic device that measures and reports a vehicle's specific force and angular rate (e.g., yaw) using a combination of accelerometers and gyroscopes. In some embodiments, the system controller 101 uses data from the IMU 118 to estimate the vehicles position in the road using a dead reckoning process, such as described, for example, in U.S. patent application serial no. 18/612,682, entitled "METHOD AND APPARATUS FOR DETERMINING LANE LEVEL LOCALIZATION OF A VEHICLE WITH GLOBAL COORDINATES", filed March 21, 2024, incorporated herein by reference. For example, the system controller 101 can use data from the IMU 118 when position data from the GPS 120 is unavailable.

System controller 101 can include an image acquisition unit 125. In some embodiments, image acquisition unit 125 can include one or more image sensors (e.g., cameras) located at various positions on the vehicle (e.g., left side, right side, front, and/or rear), such as image sensor 121, image sensor 122, and image sensor 126. System controller 101 can also include a data interface bus 128 communicatively connecting processor 130 to the image acquisition unit 125 and the other above reference devices.

### AI & ASIL D/B Localization-based ASIL B Lane Sensing

In some embodiments, the system controller can deliver lane sensing information using an AI model image match, combined with ASIL D location-based metadata sourced from maps (e.g., SD maps). That is, in some embodiments, the system controller generates the lane sensing information by leveraging the lane sensing data (e.g., camera data from front main view camera (FMC), front narrow view camera (FNC), and/or front wide view camera (FWC)), which provide the information about the curvature, positions, and geometry of detected lanes. In some embodiments, the system controller transforms this information into a top-down perspective. In some embodiments, the system controller generates the lane sensing information by using the localization location (e.g., the ASIL B localization location) to acquire SD map data that provides lane information such as, for example, but not limited to, a predetermined, static number of lanes and lanes curvature, geometry specific to the ego lane's location. In some embodiments, the system controller transforms this information into a bird's eye view (top-down perspective) derived from the map data. By combining both sets of data into a bird's eye view, which acts as a common reference frame, the system controller is able to directly compare the two perspectives. With both sets transformed into a bird's eye view, in some embodiments, the system controller uses artificial intelligence (AI) techniques to compare the two sets to determine if there is a match (or at least a partial match). The AI techniques for direct comparison can be vary and can include traditional approaches or deep learning based approaches.

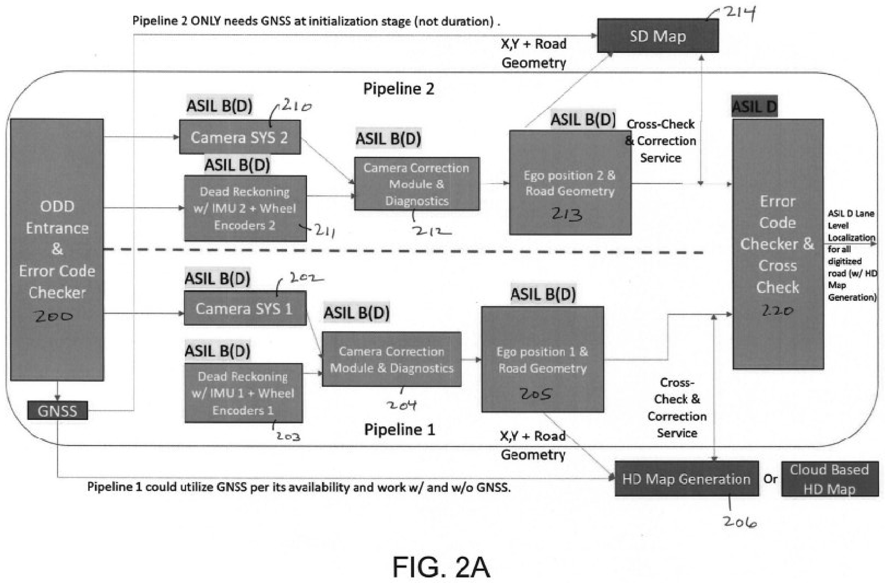

FIG. 2A illustrates some embodiments of a system for performing static object detection and localization. In some embodiments, this system uses the localization-based lane sensing described herein. The system includes processing logic that comprises hardware (circuitry, dedicated logic, etc.), software (e.g., software running on a chip), firmware, or a combination of the three. In some embodiments, the processing logic is part of a vehicle (e.g., an electric vehicle).

Referring to FIG. 2A, the system includes 2 pipelines, referred to as pipeline 1 and pipeline 2, to perform lane level location localization. In some embodiments, the lane level location localization is ASIL-B/D localization, and the ASIL-B/D localization utilizes the two pipelines to achieve a fault-tolerating ASIL rating. In some embodiments, pipeline 1 utilizes ASIL D global position localization and lane sensing from cameras to provide global and lane-level localization for the ego vehicle. In some embodiments, this pipeline is supplemented with outputs from modules for traffic sign recognition (TSR) real-time high-definition (HD) map generation or real-time Google map data, which supplies static objects such as, for example, but not limited to, lanes, traffic signs and lights . In some embodiments, pipeline 2 provides ASIL B level localization using GNSS at initialization stage and dead reckoning, refined with standard definition (SD) map information. In some embodiments, pipeline 2 also utilizes static objects such as, for example, but not limited to, lanes, traffic signs and lights from the SD map.

In some embodiments, at the beginning of each of pipelines 1 and 2, the GNSS data is used to provide initial global location. Thereafter, in some embodiments, each of pipelines 1 and 2 uses camera information, dead reckoning to obtain a lane level location. In some embodiments, the dead reckoning utilizes an inertial measurement unit (IMU) and wheel encoder in combination with the dead reckoning to obtain the lane-level location. Subsequently, in one or both pipelines, map information is obtained from one or more map databases using the lane level location and road geometry to conduct matching with the camera information to align and obtain accurate global coordination for producing the lane level localization information.

Referring to FIG. 2A, the pipelines start at Operational design domain (ODD) entrance and error code checker 200 which represents an entry point for determining the lane level location information that is performed as part of reviewing the operating environment in which the vehicle is driving. This determination can be part of determining the operating conditions under which a vehicle's automated driving systems can be run safely (e.g., a diagnostic error check). The trigger from ODD entrance and error code checker 200 triggers a first camera system 202 to obtain images while the dead reckoning processing logic 203 that generates dead reckoning information using a first IMU and a wheel encoder to obtain the lane level location 203. In some embodiments, the dead reckoning process performed by dead reckoning processing logic 203 is described in U.S. patent application serial no. 18/612,682, entitled "METHOD AND APPARATUS FOR DETERMINING LANE LEVEL LOCALIZATION OF A VEHICLE WITH GLOBAL COORDINATES", filed March 21, 2024, incorporated herein by reference. The outputs of camera system 202 and dead reckoning processing logic 203 are fed into a camera correction module and diagnostic tool module 204 for which performs image processing on the output of the camera. The outputs of the camera correction module 204 are sent to the ego position and road geometry generation engine 205 that generates the vehicle's ego position for lane level location and the road geometry in response to these inputs. In some embodiments, the vehicle's ego position for lane level location and the road geometry is represented as a bird's eye view (BEV). In some embodiments, the vehicle's ego location is represented by an X,Y location.

In some embodiments, the system sends the X,Y position and road geometry to map 206 to obtain lane curvature and shape to conduct matching with the camera information. In some embodiments, the map data is represented in BEV like the vehicle's ego position for lane level location and the road geometry, and, for the same location, the system compares and matches the two BEV's lane information to obtain merged/fused lane sensing information. In some embodiments, map 206 comprises a high-definition (HD) map or cloud based HD map (e.g. a Google HD map) that includes static objects for the road (e.g., freeway and traffic sign data) upon which the vehicle is located. In some embodiments, map 206 also receives and utilizes GNSS output by GNSS 201 if available to specify the vehicle's location or can work without GNSS if not available. The system performs a comparison as a cross check between the camera data and the map data to determine if there are any errors between the lane sensing data from the camera 202 and dead reckoning processing logic 203 and map data corresponding to the vehicle's location. That is, in some embodiments, the map information is queried to obtain the lane curvature, shape, etc. to conduct matching with the camera information to align and get accurate global coordination. In some embodiments, the matching is performed using AI. The global coordination may be necessary when the camera data is incomplete. For example, the location information and geometry provided to the HD map 206 can compensate for any limitations or gaps in the camera-base sensing that has occurred. For example, if the camera senses miss detecting certain lane markings or encounters challenging lighting conditions, the map data from map 206 can provide supplemental information to improve localization accuracy.

The trigger from ODD entrance and error code checker 200 also triggers a second, different camera system 210 to obtain images while the dead reckoning processing logic 211 generates dead reckoning information using a first IMU and a wheel encoder to obtain another estimate of the lane level location 213. The outputs of camera system 210 and dead reckoning processing logic 211 are fed into a camera correction module and diagnostic module 212 for which performs image processing on the output of the camera. The outputs of the camera correction module 212 are fed to ego position and road geometry generation engine 213 that generates the vehicle's ego position for lane level location and the road geometry in response to these inputs. In some embodiments, the vehicle's ego location is represented by an X,Y location.

In some embodiments, the system sends the X,Y position and road geometry to map 214 to obtain lane curvature and shape to conduct matching with the camera information. In some embodiments, map 214 comprises a standard-definition (SD) map that includes static objects for the road (e.g., freeway and traffic sign data) upon which the vehicle is located. In some embodiments, map 214 also receives and utilizes GNSS output by GNSS 201 to specify the vehicle's location or can work without GNSS if not available. In some embodiments, the GNSS output is only needed at the time of initialization of this stage of pipeline 2. The system performs a comparison as a cross check between the camera data and map data to determine if there are any errors between the lane sensing data from the camera 210 and dead reckoning processing logic 211 and map data corresponding to the vehicle's location. That is, in some embodiments, the map information is queried to obtain the lane curvature, shape, etc. to conduct matching with the camera information to align and get accurate global coordination. In some embodiments, the matching is performed using AI. For example, the location information and geometry provided to the HD map 214 can compensate for any limitations or gaps in the camera-base sensing that has occurred.

The ego position and road geometry from both pipelines 1 and 2 are provided to error code checker and cross check module 220 for comparison. In some embodiments, the cross check performs its comparison using AI matching, such as the AI matching disclosed herein. The error code checker and cross check 220 compares the outputs of each of pipelines 1 and 2 in order to generate ASIL-D lane level localization for all digitized roads. In some embodiments, if the outputs of the pipelines 1 and 2 are the same, then the output is made for use with the lane level localization; however, if the outputs do not match, then no output is made.

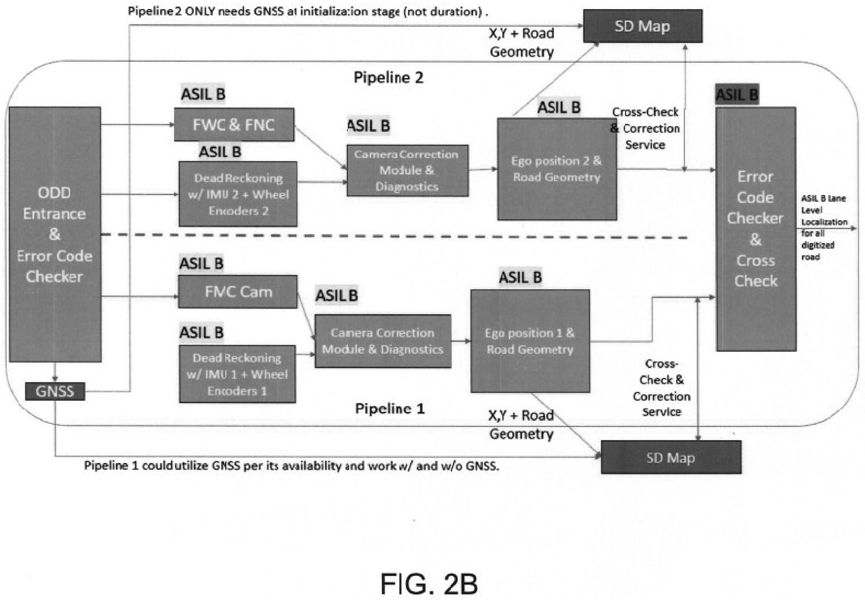

Note that in some embodiments, an SD map replaces HD map 206 for pipeline 1. FIG. 2B illustrates such a system. If the HD map 206 is replaced by an SD map, then pipeline 1 produces ASIL-B lane level localization output to gain the ego vehicle's nearby traffic signs and lane information from the map at.

Thus, the system performs the ASIL-B lane sensing using ASIL-B/D location level localization output information and map information as extra data sources to gain fundamental lane sensing information. In some embodiments, ASIL-B lane sensing uses camera image data to extract lane sensing information as well.

In some embodiments, AI-based matching is performed between camera data and map data to determine if there is a match. In some embodiments, the matching is part of an AI-based analysis of curvature and lane geometry can be executed through two dimensions: ego latitude and longitude. In the ego latitude direction, the approach involves leveraging SD/HD map metadata to comprehend road and lane details. Subsequently, camera inputs, including distance from ego to each lane marker, lane marker type, color, and style, are utilized to estimate the ego lane ID. On the other hand, the longitude direction necessitates a focus on curvature data. In some embodiments, the ASIL-B lane sensing uses AI-based image matching to align the map-based lane sensing and camera-based lane-sensing to provide ASIL-B level lane sensing data. Employing an AI-based matching method enables identification of the closest curvature match between the map and camera lane. This is beneficial in that with the extra data (localization and the map data), the ASIL-B lane sensing can provide more reliable and accurate lane sensing information. Also, use of the additional data increases safety ratings from QM (no cross check with only cameras) to ASIL-B. Furthermore, the AI-based image matching helps handle complex cases covering more corner cases.

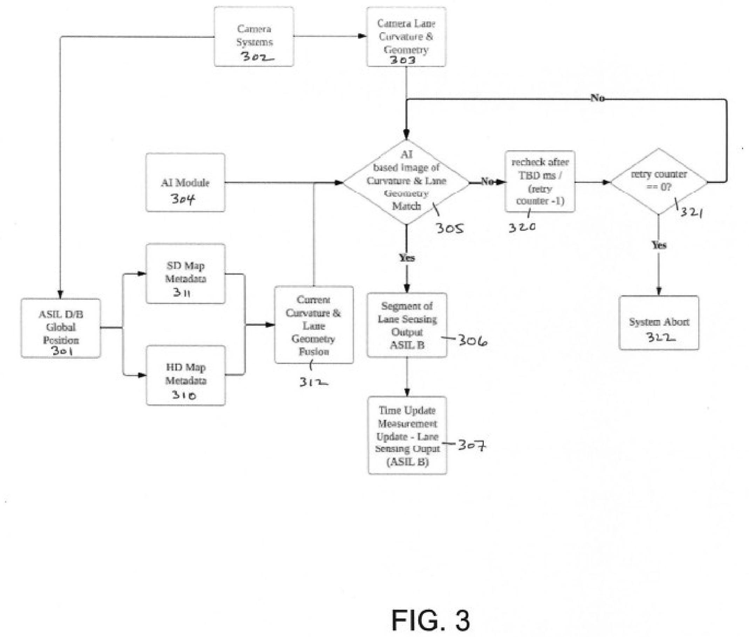

FIG. 3 is a data flow diagram of some embodiments of a process for performing lane sensing. The process is performed by processing logic that comprises hardware (circuitry, dedicated logic, etc.), software (e.g., software running on a chip), firmware, or a combination of the three. In some embodiments, the processing logic is part of a vehicle (e.g., an electric vehicle). In some embodiments, the processing logic is part of a system controller for a vehicle (e.g., FIG. 1) in support of providing lane and other static object information to a vehicle occupant.

Referring to FIG. 3, the process includes processing logic obtaining an ASIL D/B global position 301 and accessing one or both of a SD map metadata 311 and HD map metadata 310 with the global position. Thus, in such a case, the lane level location that is obtained is based on a global position. In some embodiments, the global position is provided by GNSS. In some other embodiments, the lane level location is not based on a global position but can be based on an estimated location.

In some embodiments, depending on the position, processing logic accesses one or both of SD map metadata 311 or HD map metadata 310 to obtain current curvature and lane geometry information 312 corresponding to road at the vehicle's global position 301. In some embodiments, this current curvature and lane geometry information 312 comprises static object information that can be considered static lane sensing information and is provided to AI module 304.

Similarly, a camera system 302 takes one or more images in proximity to the vehicle. From these images, processing logic obtains lane curvature and geometry 303 and provides this information to AI module 304. Processing logic executes AI module 304 which performs AI-based image matching between the lane sensing data consisting of the camera lane curvature and geometry data 303 and the map data from the SD map metadata 311 and/or HD map metadata 310 that includes the current curvature and lane geometry information for the global position of the vehicle. If there is a match, processing logic outputs that segment of the lane sensing output 306. In some embodiments, this output is presented at least in part of the display screen in the interior of the vehicle.

Subsequently, processing logic performs a time measurement update to specify the timing associated with the lane sensing output (processing block 307).

If the AI module 304 determines there is not a match between the map data from the SD map metadata 311 and HD map metadata 310 and the camera lane curvature and geometry information 303, then processing logic enters a recheck loop (320, 321) that repeats the AI matching for a predetermined period of time (e.g., a predetermined number of iterations). In FIG. 3, recheck 320 is performed a number of times equal to an amount of a counter value (e.g., retry count) which is decremented each retry, and if no match occurs after the predetermined number of retries, then the system aborts (processing block 322).

In some embodiments, to better compare and match the lane sensing data from the two sources, the AI module 304 includes an Encoder-Decoder architecture with convolution layers as a backbone for lane feature extraction is used. The input of this AI model is the two pipeline's lane sensing information (i.e., the camera lane sensing data and the map data). The system processes each pipeline's lane data is processed and used by multiple convolutions and pooling layers to extract a feature vector. Using the two feature vectors, a final combined feature vector is created. In some embodiments, the final combined feature vector is created by concatenating the two feature vectors into one. The final combined feature vector is fed to a decoder which use an up-sampling layer to decode the feature vector, creating a decoder output that includes the match lane sensing data.

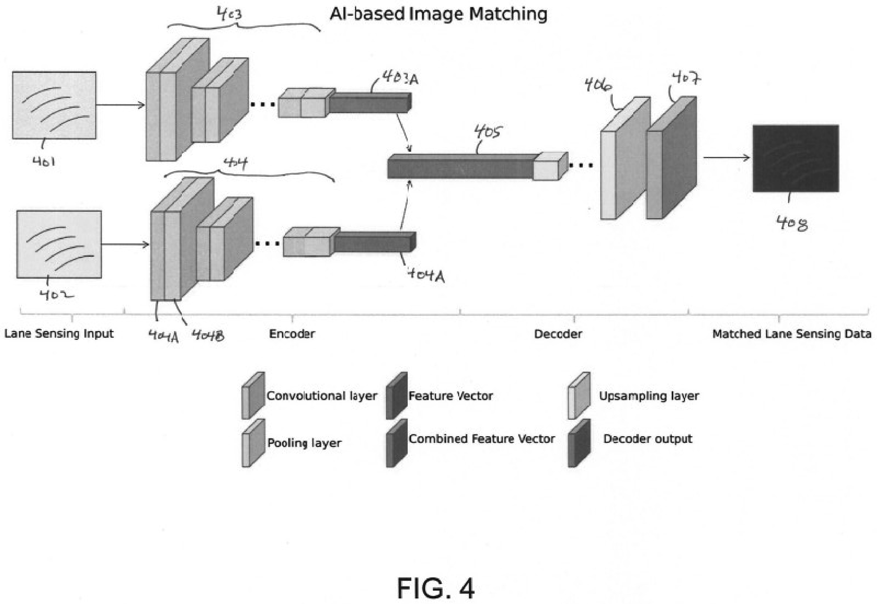

FIG. 4 illustrates an example of some embodiments an encoder-decoder architecture. The encoder-decoder architecture comprise processing logic that comprises hardware (circuitry, dedicated logic, etc.), software (e.g., software running on a chip), firmware, or a combination of the three. In some embodiments, the processing logic is part of a vehicle (e.g., an electric vehicle).

Referring to FIG. 4, the camera sensing data 401 is input to a series 403 of convolution and pooling layers 403 that generates a feature vector 403A. Similarly, the map data 402 is input to a series of convolutional and pooling layers 404 to produce a feature vector 404A. The feature vectors are combined to create combined feature vector 405. In some embodiments, the feature vectors are combined by concatenation to create the combined feature vector 405. The combined featured vector 405 is input to an upsampling layer 406 used to decode the combined feature vector 405 to produce a decoded output 407 that represents the final matched lane sensing data 408. The encoder-decoder architecture is known to those skilled in the art.

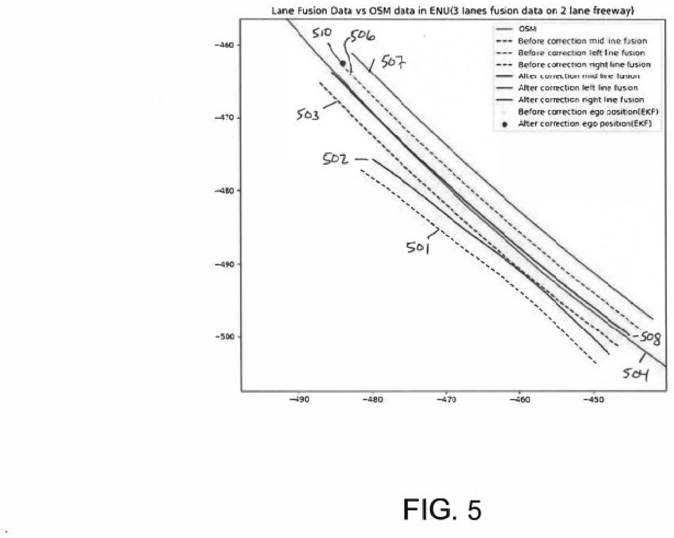

FIG. 5 illustrates an alignment between the open-street-map (OSM) and camera lane. Referring to FIG. 5, the ASIL B/D position depicts the ego pose in line 504 and highlights lane markers in dashed lines 503, 506, and 501. After matching the camera data, the ego pose undergoes correction and corrected versions of lines 502, 506, and 501 are show as 508, 507, 502, along with the corrected position at 510.

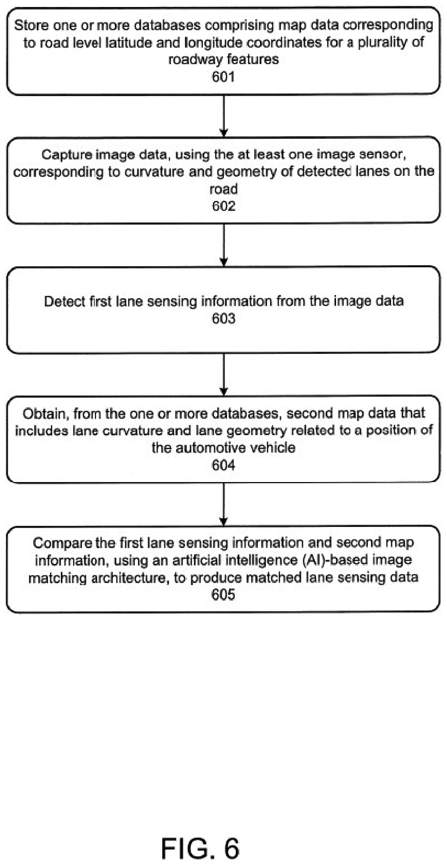

FIG. 6 is a data flow diagram of some embodiments of a process for updating a location of a vehicle navigating a road. The process is performed by processing logic that comprises hardware (circuitry, dedicated logic, etc.), software (e.g., software running on a chip), firmware, or a combination of the three. In some embodiments, the processing logic is part of a vehicle (e.g., an electric vehicle).

Referring to FIG. 6, the process includes processing logic storing one or more databases comprising map data corresponding to road level latitude and longitude coordinates for a plurality of roadway features (processing logic 601).

Processing logic captures image data, using the at least one image sensor, corresponding to curvature and geometry of detected lanes on the road (processing logic 602) and detects first lane sensing information from the image data (processing logic 603). In some embodiments, the image sensor comprises a camera system with one or more cameras.

Processing logic also obtains, from the one or more databases, second map data that includes lane curvature and lane geometry related to a position of the automotive vehicle (processing logic 604). In some embodiments, the one or more databases include a standard definition (SD) map database that includes urban roadway information and a high-definition (HD) map database that includes highway information. In some embodiments, the position of the vehicle used to obtain information from the one or more databases is based on a global navigation satellite system (GNSS) signal. In some other embodiments, the GNSS signal is only used at the beginning and the position is determined in other ways.

Processing logic compares the first lane sensing information and second map information, using an artificial intelligence (AI)-based image matching architecture, to produce matched lane sensing data (processing logic 605). In some embodiment, the AI-based image matching architecture matches lane curvature and lane geometry of the first lane sensing information and the second map information. In some embodiments, the AI-based image matching architecture comprises an encoder-decoder architecture. In some embodiments, the AI-based image matching architecture performs matching by applying, with the encoder-decoder architecture, multiple convolutional and pooling layers separately to first lane sensing data and the second information to create feature vectors for each of the first lane sensing data and the second information, combining the feature vectors into a combined feature vector; and feeding the combined feature vector to a decoder that uses an upsampling layer to generate the matched lane sensing data.

In some embodiments, the artificial intelligence (AI)-based image matching architecture outputs lane level localization data corresponding to the vehicle. In some embodiments, the lane location localization information is on an ASIL B safety level. In some embodiments, the artificial intelligence (AI)-based image matching architecture outputs lane level localization data corresponding to the vehicle is there is a match between first lane sensing information and second information. In some other embodiments, the artificial intelligence (AI)-based image matching architecture outputs lane level localization data corresponding to the vehicle that includes the first lane sensing information augmented with data from the second information if a certain level of matching is determined to exist. For purposes of determining a match, AI module is trained with data and concludes what is considered a match. For the labelled data or data preparation stage, the system can be initialized with a certain match level (e.g., the system sets the as the certain level to determine if the two data source are matched or not), and then these (and other) data sources could be used to train the AI model.

Thus, as described above, in some embodiments, to obtain the ASIL D lane level localization, techniques disclosed herein use one pipeline to access detailed map information (e.g., SD/HD map) of the local area, and gain a foundation of the lane environment surrounding the vehicle, including the lane sensing information, while using another pipeline directly extracts the detailed lane sensing information from the camera image data. An AI-based model performs matching of the two kinds of lane sensing information which guarantees ASIL-B level lane sensing data. Furthermore, by combining the ASIL D localization and SD/HD map based lane geometry data with the camera's lane detection output, AI-based image matching can generate a comprehensive understanding of the lane geometry, thereby allowing the acquisition of detailed, complete lane detection information on ASIL B safety level, encompassing all the roadways on the road.

By using the location and map data as extra sources, the system has redundancy, thereby enhancing the reliability and accuracy of lane detection. This approach provides elevates the safety level from QM to ASIL B, ensuring a higher standard of safety and reliability in autonomous driving systems. By using the AI-based matching method, instead of relying on classical methods like interactive closest point (ICP), the system employs AI-based matching that can better understand road curvature and provide more accurate comparisons. The integration of the AI map data improves the overall performance of the lane sensing a system, making it more adaptable to various driving scenarios and environments. Moreover, the dual pipeline approach allows for flexibility, accommodating advancements in AI and sensing technology for future improvements. Lastly, the combination of real time sensing data and static map information enables the system to maintain robustness in diverse weather and lighting conditions.

### AI & ASIL D/B localization-based Traffic Sign Recognition (TSR)

TSR (Traffic Sign Recognition) is a crucial component to ADAS systems that rely on traffic signs to operate autonomously in their environments. Autonomous cars use TSR to determine ODD (Operational Design Domain), aid in localization, modulate certain parameters like speed limits, and determine crucial parameters for motion planning, like distances to exits. While TSR is an active area of research, many current TSR systems are purely computer vision supervised learning (ML) based, needing a large amount of annotated data: images with labeled bounding boxes. Such supervised learning-based pipelines are powerful in their ability to represent a model of what an object looks like, but they suffer from many problems: they need large (tens of thousands or more) annotated examples labeled by humans, they perform poorly in out-of-distribution examples, and are prone to failing in corner cases that the training data did not include. For example: adverse weather conditions, new types of signs that were not included in the training set, and slight variations in camera positioning.

Traditional traffic sign recognition methods also fully depend on the image processing which struggle with variable light conditions, low contrast traffic signs, occlusions, and distinguishing between diverse types of traffic signs, especially under adverse weather conditions. Dynamic scene changes, camera calibration issues, and interference from reflections might also downgrade the accuracy of traffic sign recognition.

Supervised learning-based image processing and machine learning/deep learning methods that highly depend on the big, annotated dataset, can be costly and time-consuming to collect. These methods struggle with generalization, performing poorly in corner cases such as harsh weather conditions and new type traffic signs. Dynamic environments also might trigger some difficulty, like switching to different traffic sign systems.

Current TSR adheres to Quality Management (QM) safety levels. There are no robust safety mechanisms and fault tolerance required for ASIL B or ASIL D standards. This limits their reliability in critical situations and their suitability for safety-critical applications like autonomous driving, which demand higher levels of redundancy and operational integrity.

Accurate TSR is useful for ADAS systems. In some embodiments, TSR enables warning systems for driver assistance features to alert the driver about speed limits, stop signs and other features that need to be brought to the driver's attention to ensure a safe driving environment. TSR also enables more advanced map diagnostics to cross-check map metadata with TSR recognition and populate diagnostics with error codes. TSR also enables more advanced ODD detection for L3+ ADAS features that require ASIL D/B ODD. Accurate TSR also can be used as initial input into motion planning routing algorithms that depend on scene and contextual awareness to accurately plan routes and path planning algorithms.

In some embodiments, TSR is performed using camera data in conjunction with prior traffic sign data and an AI model to perform AI based traffic sign recognition. In some embodiments, to increase accuracy of TSR and overcome some of the problems aforementioned, the system delivers TSR information using an AI model image match, combined with ASIL D location-based metadata sourced from SD or HD map databases. That is, the system uses an addition or augmentation to an ML pipeline: a map matching pipeline that uses prior information about the location of traffic signs as a correction mechanism for an ML pipeline.

The AI based traffic sign recognition system receives these inputs to output traffic sign data that may be utilized as part of lane level location localization. In some embodiments, the localization based traffic sign recognition includes recognizing traffic signs and extracting features, along with SD/HD map data to provide road/lane and traffic sign metadata, and an AI model cross check to perform cross check on reliability of TSR and match road/lane features with map metadata for ego vehicle localization. SD Map and HD Map datasets work by storing associated metadata with global locations in a map. The maps receive The metadata includes road markers, traffic signs, bridges, toll ways, exits, as well as lane markers. Moreover, the pipeline makes traffic sign data available to the vehicle based on location query.

In other words, the vehicle has access to data from a subset of traffic signs in its proximity by providing location information when accessing the database. A mismatch between camera-detected and map-provided landmark pose graphs could be a result of inaccurate vehicle localization. This ASIL B level traffic sign detection and pose estimation system could be used to validate location metadata of such landmarks in the response from SD and/or HD map query this further has the potential to achieve ASIL D safety level traffic sign localization through performing a cross check and comparing a pose graph of traffic signs detected by cameras to the landmark positions from map data.

In some embodiments, the TSR system utilizes two subsystems. The first subsystem performs an accurate ASIL S D/B localization. Some embodiments of the pipeline that performs ASIL S D/B localization which is described in further detail below. In some embodiments, the localization provides lane level accuracy even in GNSS-denied or LTE-denied areas. In some embodiments, the second subsystem is a matching pipeline that leverages ASIL S D/B localization for precise matching of expected traffic signals to the output of the object detection performed on camera images.

In some embodiments, a process of performing TSR includes several operations. First, vehicle cameras are used to detect and perceive the position of static object (e.g., traffic signs) in the vehicle's proximity. The detected static objects are then matched with entries in the SD and/or HD map databases, which contain the precise or approximate georeferenced positions of known static objects, including traffic signs. Through map matching algorithms (e.g. AI-model matching algorithms), the vehicle compares the observed sign locations with the expected positions based on the map data, refining its estimated position accordingly. Discrepancies between observed and expected sign locations are used to adjust the vehicle's position estimate, enhancing localization accuracy. In some embodiments, this process takes place iteratively. As it leverages known landmarks for continuous validation and correction of position estimates, it complements the effectiveness of filtering algorithms in maintaining accurate localization over time.

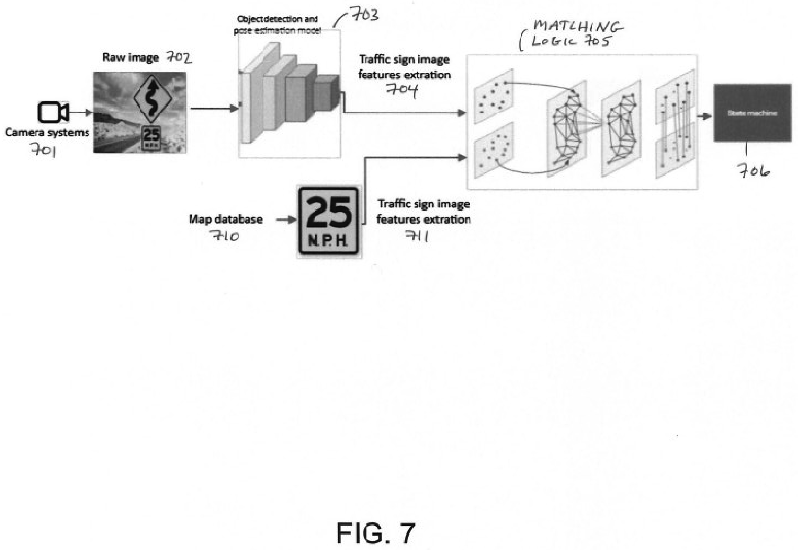

FIG. 7 illustrates some embodiments of a process for performing AI based traffic sign image recognition. The process in FIG. 7 is performed by processing logic that comprises hardware (e.g., a processor, circuitry, dedicated logic, etc.), software (such as is run on a general-purpose computer system or a dedicated machine), firmware, or a combination of all three.

Referring to FIG. 7, process includes processing logic capturing, using a camera system, one or more images 702 of static objects in the proximity of the vehicle (processing block 701). Processing logic performs object detection with respect to each image (processing block 703). In some embodiments, processing logic performs object detection with respect to each image using a pose estimation model. After performing object detection, processing logic performs traffic sign image feature extraction (processing block 704). Separately, processing logic accesses one or more map databases to obtain map data for the area in a certain proximity of the location of the vehicle (processing block 710) and performs traffic sign image feature extraction on the map data (processing block 711).

Processing logic uses matching logic to compare the features extracted from the raw camera images and those of the map database to determine if there is a match (processing block 705). In some embodiments, the matching logic is an AI-based matching logic. If there is a match, then processing logic outputs such an indication (processing block 706). In some embodiments, the output goes to a state machine. In some embodiments, at this point, the traffic sign is included in the ego vehicle environment, and the vehicle knows the traffic sign location.

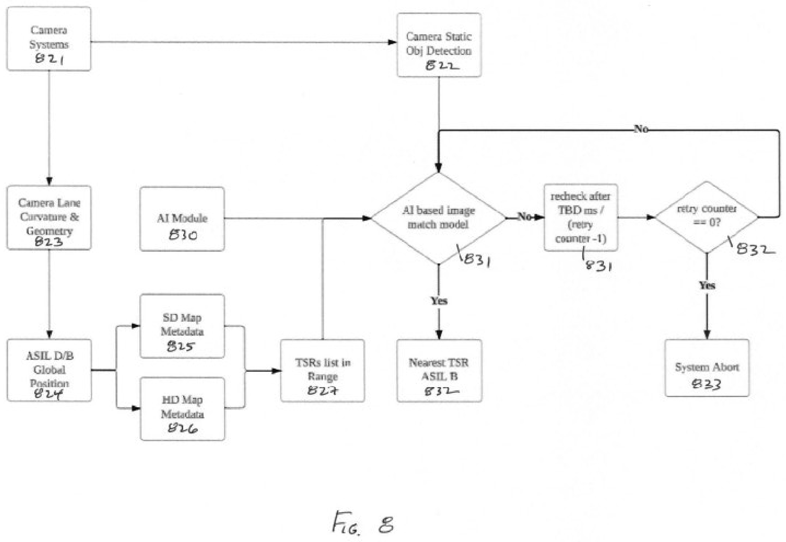

FIG. 8 is a data flow diagram illustrating some other embodiments of a process for performing traffic sign recognition. The process in FIG. 8 is performed by processing logic that comprises hardware (e.g., a processor, circuitry, dedicated logic, etc.), software (such as is run on a general-purpose computer system or a dedicated machine), firmware, or a combination of all three.

Referring to FIG. 8, camera system 821 captures images of static objects in proximity of the vehicle. Those images undergo static object detection 822 with the results being provided to AI module 830. The camera lane curvature and geometry (823) from the images taken by camera system 821 is sent to ASIL D/B global position module 824, which identifies the global position of the vehicle. In some embodiments, this is done using the lane curvature and geometry information as well as GNSS data. In some embodiments, the global position is an ASIL D/B global position. Based on the ASIL D/B global position, the map data is accessed to identify traffic signs and other static objects that are in the proximity of the global position of the vehicle. In some embodiments, the map data includes high definition (HD) map metadata of HD map database 826 and standard definition (SD) map metadata of SD map database 825. In some embodiments, the HD map metadata can include highway related static objects, while the SD map metadata includes urban related static objects. The outputs of the map data include a traffic sign recognition list 827 of static objects that are in the range of the global position, and the traffic sign recognition list 827 is sent to AI module 830.

AI module 830 performs image matching (830) between the static objects detected from the camera and those output from the map data 827. If there is a match, the AI module 830 outputs the nearest traffic sign recognized (processing block 728). If there is no match, a loop (831, 832) is entered with the decrementing counter that repeats the image matching process for a predetermined number of times, or iterations. If no match occurs during that predetermined period of iterations, then the system aborts (833).

In some embodiments, the matching logic of the AU module 830 includes a pyramid attention network (PAN) for deformable image registration. In some embodiments, such a PAN incorporates a dual stream pyramid encoder with channel wise attention to boost the feature representation. The PAN also includes a multi-head local attention transformer. The multi-head local attention transformer operates as a decoder to analyze motion patterns and generate deformation fields. For more information on one such PAN though may be unusual, see Wang et al., "Pyramid Attention Network for Medical Image Registration"; arxiv.org: 2402.09016v1, February 24, 2024.

In some embodiments, the output of the AI/ML model of AI module and the map metadata share the same format: a global latitude, longitude and height for the detected sign, as well as sign type and color. The fusion of map traffic signa data with an ML pipeline from the camera can be done in several ways. For example, in some embodiments, the location output of both the model and the map data are fused in something like a Kalman filter to achieve a smoother output of the traffic sign location. With ASIL D localization, traffic sign information can be provided in real-time that helps gain an initial expectation of coming traffic sign. Fusing the map's traffic sign data with the camera's traffic sign detection output improves the accuracy of AI-based TSR, thereby improving the reliability of traffic sign information on ASIL B safety level.

In some embodiments, the AI-based TSR system includes an embedded cross check mechanism that checks the result of the AI based matching system and outputs the results if there is a match. In some embodiments, the system only outputs the location of a traffic sign when the AI model determines both the type and color of a traffic sign of both the static objects from the map metadata and those from the object recognition match within a certain threshold of their locations. This has the benefit of reducing false positives but might increase false negatives.

In some embodiments, the map metadata is used as an input to the ML training loop. In instances where the map detects a traffic sign but the camera-based ML inference does not, the system can feed a video around the instance into the annotation pipeline for further improvement and re-training of the TSR ML model.

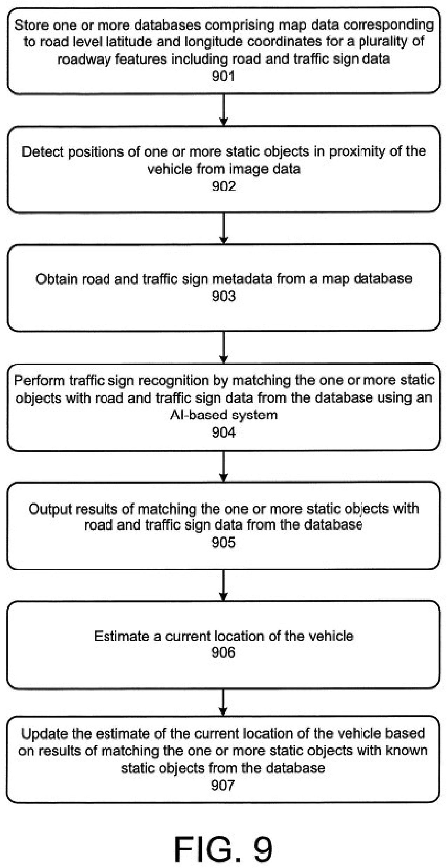

FIG. 9 is a data flow diagram of some embodiments of a process for performing traffic sign recognition. The process is performed by processing logic that comprises hardware (circuitry, dedicated logic, etc.), software (e.g., software running on a chip), firmware, or a combination of the three. In some embodiments, the processing logic is part of a vehicle (e.g., an electric vehicle).

Referring to FIG. 9, the process includes processing logic storing one or more databases comprising map data corresponding to road level latitude and longitude coordinates for a plurality of roadway features including road and traffic sign data (processing block 901).

Processing logic detects positions of one or more static objects in proximity of the vehicle from image data (processing block 902). The image date can be obtained from one or more image sensors on of vehicle. In some embodiments, the static objects are traffic signs. In some embodiments, detecting the positions of one or more static objects in proximity of the vehicle from the image data comprises performing object detection and using a pose estimation model to extract traffic sign image features.

Processing logic also obtains road and traffic sign metadata from the database (processing block 903).

Thereafter, processing logic performs traffic sign recognition by matching the one or more static objects with road and traffic sign data from the database using an AI-based system (processing block 904) and outputs results of matching the one or more static objects with road and traffic sign data from the database (processing block 905). In some embodiments, the road and traffic sign metadata comprise one or more of road markers, traffic signs, bridges, tolls, exits and lane markers, and the output comprises, for a detected sign, a longitude, a latitude, and one or more of a height, color and sign type.

In some embodiments, processing logic performs traffic sign recognition by matching the traffic sign image features extracted from the image data with traffic sign image features extracted from the road and traffic sign data. In some embodiments, matching the traffic sign image features extracted from the image data with the traffic sign image features extracted from the road and traffic sign data is performed using a pyramid attention network (PAN).

In some embodiments, the process further includes estimating a current location of the vehicle (processing block 906) and updating the estimate of the current location of the vehicle based on results of matching the one or more static objects with known static objects from the database (processing block 907).

In conclusion, map data can be extremely useful in augmenting and improving the accuracy of ML models, by providing a source of prior knowledge of the environment to the ML model, instead of only relying on real-time inference of a neural network.

Thus, the improved TSR techniques disclosed herein includes one or more of the following advantages. First, providing the prior traffic sign information from the SD/HD map to AI model that decreases the scope of AI recognition which makes the system recognize the traffic sign in real time with a light load. Also even if the computer vision's output from this camera system is not highly accurate (e.g., clear), the correct traffic sign still can be obtained. Second, using the traffic sign information from SD/HD map as feedback corrections speeds up the AI classification of the traffic signs, which improves recognition accuracies. Third, by leveraging the AI model and the SD/HD map information to perform traffic sign recognition tasks, the localization system is adaptable to a variety of scenarios, environments, and road conditions because the system needs minimal inputs: possible low-quality camera lane sensing output, reliable ASIL D localization information, and robust SD/HD map information. Fourth, the combination of the AI model and the SD/HD map data with ASIL B standards improves safety and robustness, and with higher fault tolerance, it improves reliability and robustness significantly in corner cases. Furthermore, iteratively fusing the traffic sign information from SD/HD map and image processing of the camera images to benefit the accuracy of ASIL position, while employing the two pipelines independently to perform cross check decreases the false positives.

### AI & ASIL B Localization based Static ADAS AD EM Generation Method

A system and method for creating an Advanced Driver Assistance System (ADAS) or autonomous driving (AD) features with an Environmental Model (EM) at ASIL B level are disclosed. In some embodiments, the EM is used for ADAS AD occupancy prediction and path planning. Existing EMs suffer from inaccuracy and liability from low functional safety levels static objects and dynamic object detection. Furthermore, these EMs are typically based using HD map coverage which is generally limited to freeways and not urban roads.

In some embodiments, an EM at ASIL B level is generated that incorporates global and lane-level localization. In some embodiments, the EM is a static object EM generated using an AI & ASIL D location-based TSR and lane sensing and map data. In some embodiments, the EM is generated based ASIL B traffic sign recognition (TSR) results and lane sensing results combined with SD/HD map for ASIL B static object environmental generation for all digitalized roads. In some embodiments, the TSR results can be generated using the TSR processes disclosed herein. This EM can be used for applications such as, for example, but not limited to, generating occupancy grids and planning paths for ADAS or AD and achieve higher functional safety level of ADAS AD occupancy prediction and planning.

In some environments, an environmental model is used for ADAS AD occupancy prediction and path planning. However their accuracy and liability suffer from low functional safety levels static objects and dynamic object detection. Furthermore, these are typically based using HD map coverage which are generally limited to freeways but not urban roads. In some embodiments, a static object environmental model is generated based on ASIL D lane level localization which assists to output ASIL B traffic sign recognition (TSR) and lane sensing results combined with SD/HD map for ASIL B static object environmental generation for all digitalized roads. The ASIL B environmental model can be used to achieve higher functional safety level of ADAS AD occupancy prediction and planning.

In some embodiments, the EM generation system generates a static ADAS AD environmental model generation and is generated with inputs that include ASIL D lane level localization for all digitized roads, ASIL B TSR results, ASIL B lane sensing results, an HD map for both freeway and urban roads, and an on vehicle built in SD map. In some embodiments, in response to these inputs the system produces an output that comprises a ASIL B static environmental model for both freeways and urban roads, which is beneficial for robust, safe and efficient ADAS AD path planning for both freeways and urban models.

ASIL D local location lane level localization achieves the highest level function of safety and accuracy of localization for downstream tasks. In principle, ASIL D lane level localization of ego vehicle for all digitized roads help retrieve traffic signs/lights and lanes from HD and SD map to output ASIL B static objects and results in ASIL B environmental model generation for both freeway and urban driving scenarios. This also can tolerate downgrade dynamic (QM, ASIL B/D) to be ASIL B EM.

These are a number of features that enable the ASIL B real time static object EM to provide highly reliable representation of the vehicle's surroundings, enabling accurate and safe decision-making tasks such as path planning. ASIL B traffic signs and lanes with AI based image matching (e.g., match detected signs or lanes features against those from SD or HD map) provide high reliability results under various environmental conditions. In contrast, existing methods only focus on image only or no ASIL level detections. Furthermore, ASIL B TSR plus lane and QM SD plus HD maps all are inputs to generational static object models which have not been used previously. Furthermore, online HD map generation to support both freeway and urban roads has not occurred whereas most current commercial HD maps usually do not provide data for urban roads.

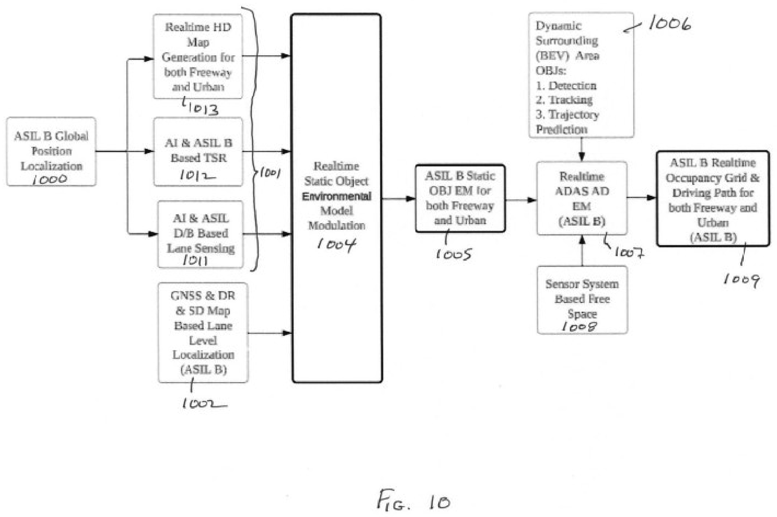

FIG. 10 a data flow diagram illustrating some embodiments of a process for generating an environmental model (EM). The process is performed with processing logic that comprises hardware (circuitry, dedicated logic, etc.), software (e.g., software running on a chip), firmware, or a combination of the three. In some embodiments, the processing logic is part of a vehicle (e.g., a system controller of an electric vehicle) or a remote system (e.g., server (e.g., cloud-based server), data center, etc.) that supports and/or communicates with such a vehicle.

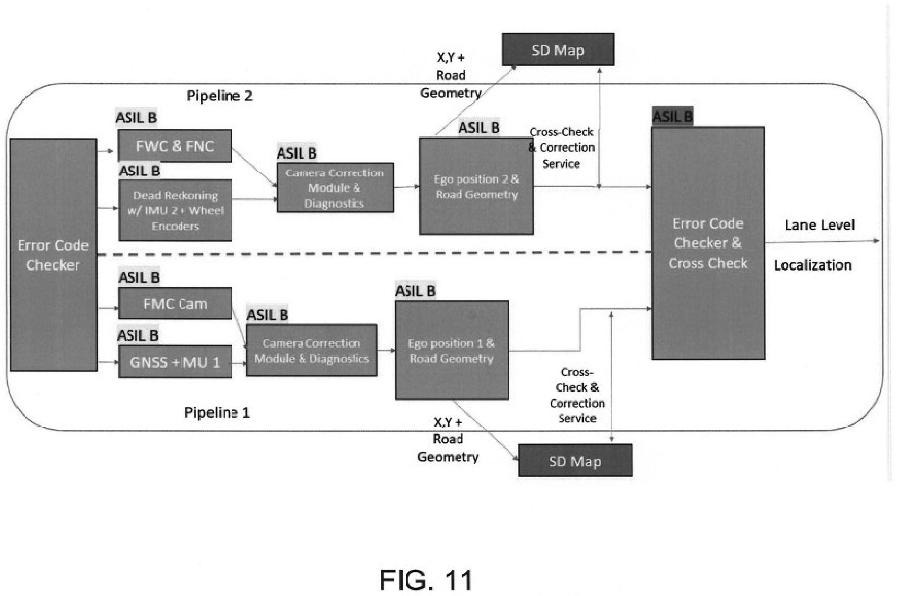

Referring to FIG. 10, two pipelines 1001 and 1002 are employed to supply static objects for the modulation of an environment model (1004). In some embodiments, the primary objective of both pipelines 1001 and 1002 is to identify and determine the locations of static elements such as lanes, road networks, and traffic signs and lights. This can be done using static object detection. This data is pivotal in constructing a thorough EM for achieving ASIL B level autonomous navigation. The first pipeline 1001 retrieves static objects through the traffic sign recognition and real-time HD map generation modules, while the second pipeline 1002 acquires static objects from either SD map module or real time Google maps. FIG. 11 illustrates some embodiments of a system architecture with the two pipelines. The outputs from both pipelines 1001 and 1002 are modulated and integrated to create a unified ASIL B level static object EM. In some embodiments, the EM module is a generation module that receives inputs like ASIL B/D localization, lane sensing data, TSR data, generated HD map data, etc., from the first pipeline 1001 and second pipeline 1002 and modulates them to stay together as static objects in the vehicle ego's view (BEV). In some embodiments, the EM module also aligns all parts by the pose (location, and angles). In some embodiments, this model is applicable to various driving scenarios, including freeway and urban driving.

More specifically, pipeline 1001 begins with ASIL D global position localization 1000 as its input. This data is then refined with lane sensing from one or more cameras to achieve global and lane-level accurate localization for the ego vehicle. In some embodiments, this global and lane-level accurate localization is supplemented with outputs from modules for traffic sign recognition (1012) (such as from, for example, the TSR pipeline described above) and real-time HD map generation (1013). These components collectively provide information on static objects like lanes, road networks, and traffic signs and lights. Pipeline 1001 forms the first step towards enabling ASIL B static object environment model modulation 1004.

In some embodiments, the second pipeline, pipeline 1002, delivers ASIL B level localization using Global Navigation Satellite System (GNSS) data and dead reckoning. An example of a system for generating ASIL B level localization using GNSS data and dead reckoning is described in U.S. patent application serial no. 18/612,682, entitled "METHOD AND APPARATUS FOR DETERMINING LANE LEVEL LOCALIZATION OF A VEHICLE WITH GLOBAL COORDINATES", filed March 21, 2024, and is incorporated herein by reference. In some embodiments, this localization is further refined with SD map information, providing an enhanced level of accuracy. Additionally, this map information supplies static objects such as lanes and traffic signs and lights. Localization data and static objects serve as the second input for real-time static object EM modulation 1004, similar to the first pipeline. This integration of the outputs of the two pipelines results in the creation of an ASIL B level static object environment model 1005. Furthermore, by utilizing two distinct pipelines, robust static object detection and localization can be obtained which is critical for safe and efficient autonomous navigation in both urban and freeway environments.

In some embodiments, the generated ASIL B static object EM model 1005 is applicable to both freeway and urban driving scenarios. When combined with dynamic objects from Bird's Eye View (BEV) perception using surround-view vehicle cameras 1006, it facilitates the creation of an ASIL B level real-time environment model 1007 suitable for ADAS and autonomous driving. In some embodiments, this environment model 1007 supports downstream tasks such as occupancy grid generation and path planning for both freeway and urban driving scenarios and their associate operations 1009. In some embodiments, the comprehensive pipeline enables ASIL B level motion planning and control capabilities, essential for high-level ADAS or autonomous driving features.

Thus, in some embodiments, the system architecture to generate the EM uses two main pipelines for static object detection and localization: pipeline 1 that utilizes ASIL D global position localization and lane sensing output from cameras to provide accurate global and lane-level localization for the ego vehicle, and is supplemented with outputs from modules for real-time ASIL B traffic sign recognition and real-time HD map generation; and pipeline 2 which provides ASIL B level localization using GNSS and dead reckoning, refined with SD map information. It also supplies static objects such as lanes and traffic signs and lights from the SD map (or real time Google map data or data from some other service).

By utilizing available sensing data including GNSS, camera lane-fusion, HD map, SD map, both IMUs, and wheel encoders, the EM module primarily provides such as 3D lane geometries crucial for ADAS features like Lane Centering Assistance (LCA). In some embodiments, a probabilistic assignment algorithm, integrated within the EM module, can be used to allocate lanes or traffic signs to static or dynamic objects, thus enriching the accuracy and detail of the environmental surrounding the vehicle. This algorithm, a probabilistic approach tailored for resolving the assignment challenge, can be used when generating the environmental model, to ensure that lanes or traffic signs are accurately associated with the relevant static or dynamic entities. Unlike deterministic algorithms such as the Hungarian method, this probabilistic approach offers a more adaptable and, under certain conditions, more effective solution, particularly in scenarios marked by complexity or dynamism. It adeptly navigates the nuances of the assignment problem in environments where traditional deterministic strategies may prove inefficient or unworkable. The modeling performance comes from irreversible and deep fusion of multiple data sources, and it cannot be split into two independent pipelines for higher safety ratings such as ASIL D. Despite these strengths, the model's reliance on GNSS and HD maps for positioning may pose challenges in urban environments with signal obstructions, warranting further investigation into alternative localization strategies to ensure robust performance across diverse operating conditions.

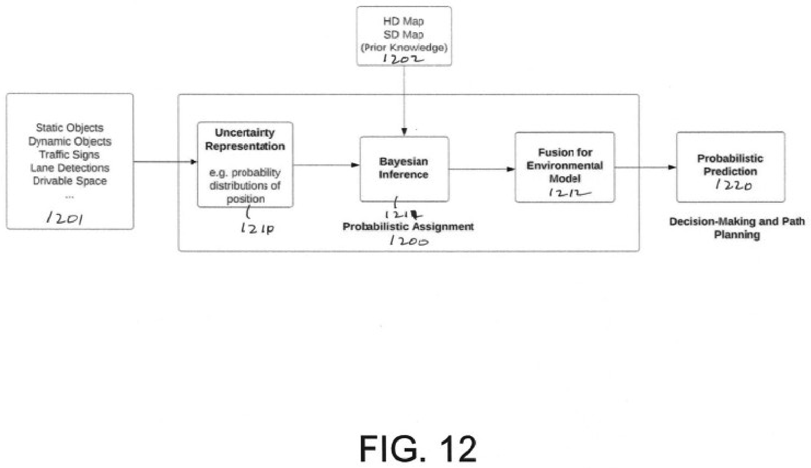

FIG. 12 is a data flow diagram of a probabilistic assignment algorithm operating with the EM module. The data flow is performed by processing logic that comprises hardware (circuitry, dedicated logic, etc.), software (e.g., software running on a chip), firmware, or a combination of the three. Referring to FIG. 12, a probabilistic assignment module 1200 receives data 1201 corresponding to static objects, dynamic objects, traffic signs, lane detections, and drivable space as well as map data 1202 from one or both of SD map database and HD map database. The probabilistic assignment module 1200 produces an uncertainty representation 1210 from data 1201 corresponding to static objects, dynamic objects, traffic signs, lane detections, and drivable space. Using a Bayesian network, a Bayesian inference 1211 is generated from the uncertainty representation 1210 and the map data 1202. A fusion system 1212 for the EM receives the Bayesian inference 1211 and, in response thereto, produces a probabilistic prediction 1220. The probabilistic prediction 1220 can be used for decision-making, path planning or other ADAS and autonomous driving uses.

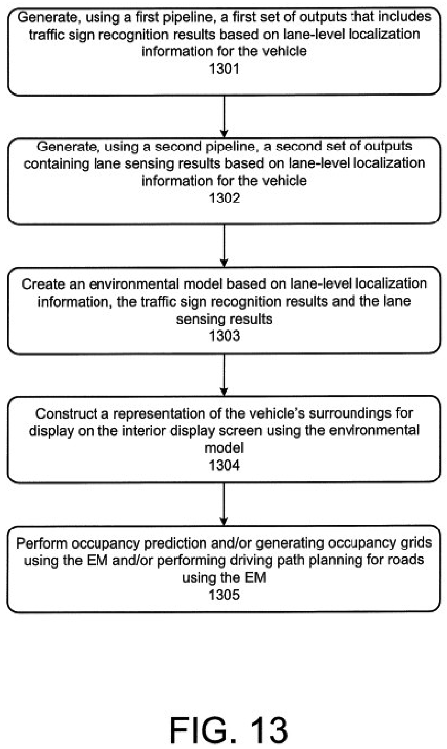

FIG. 13 is a data flow diagram of some embodiments of a process for generating an environmental model. The process is performed by processing logic that comprises hardware (circuitry, dedicated logic, etc.), software (e.g., software running on a chip), firmware, or a combination of the three. In some embodiments, the processing logic is part of a system controller of a vehicle (e.g., an electric vehicle).

Referring to FIG. 13, the process includes generating, using a first pipeline, a first set of outputs that includes traffic sign recognition results based on lane-level localization information for the vehicle (processing block 1301) and generating, using a second pipeline, a second set of outputs containing lane sensing results based on lane-level localization information for the vehicle (processing block 1302).

In response to the first and second sets of outputs, processing logic creates an environmental model based on lane-level localization information, the traffic sign recognition results and the lane sensing results (processing block 1303). In some embodiments, creating the EM is based on map data that includes a high definition (HD) map data for both freeway and urban roads. In some embodiments, the environmental model is a ASIL B level static object environmental model for both freeway and urban roads. In some embodiments, the lane-level localization information for the vehicle is ASIL D lane-level localization information for digitized roads. In some embodiments, the lane-level localization information is based on a GNSS and standard definition (SD) map data.

Processing logic can construct a representation of the vehicle's surroundings for display on the interior display screen using the environmental model (processing block 1304). In some embodiments, the process can include assigning, by the EM using a probabilistic assignment algorithm, lane or traffic sign designations to static or dynamic objects. This can be part of constructing a representation of the vehicle's surroundings for display on the interior display screen using the environmental model. In some embodiments, the process further comprises performing occupancy prediction and/or generating occupancy grids using the EM and/or performing driving path planning for roads using the EM (processing block 1305).

The generated EM described herein can be used in a number of downstream applications. For example, the generated Environmental Model, combined with dynamic object perception from BEV surround cameras, encompassing 3D detections, tracking outcomes, and anticipated trajectories for entities such as vehicles, pedestrians, cyclist and other objects of interest, establishes the groundwork for constructing a real-time environment compliant with ASIL B standards, tailored for ADAS and autonomous driving systems. This environment facilitates subsequent operations such as occupancy grid generation and path planning. The generated EM described herein can also be used in motion planning and control applications. For example, the EM enables ASIL B level motion planning and control capabilities, crucial for the safe and efficient operation of autonomous driving features.

The EM generation techniques described herein are robust and advanced because they provide a more accurate static environment model with reliable resolution by leveraging the strengths of both existing maps and real-time sensor data. By combining information from existing maps and real-time generated maps, the approach enhances the overall accuracy and relevance of the static EM. The techniques ensure ASIL B level safety (can be improved to ASIL D if two pipelines' sensory inputs are independent) and benefits downstream tasks like occupancy grid map generation and path planning, contributing to safer and more reliable autonomous driving systems.

There are a number of example embodiments described herein.

Example 1 is an automotive vehicle that includes: an interior display screen; a vehicle navigation system having a memory, and one or more processors. The one or more processors are configured to: generate, using a first pipeline, a first set of outputs that includes traffic sign recognition results based on lane-level localization information for the vehicle; generate, using a second pipeline, a second set of outputs containing lane sensing results based on lane-level localization information for the vehicle; responsive to the first and second sets of outputs, create an environmental model (EM) based on lane-level localization information, the traffic sign recognition results and the lane sensing results; and construct a representation of the vehicle's surroundings for display on the interior display screen using the model.

Example 2 is the automotive vehicle of example 1 that may optionally include that the environmental model is a ASIL B level static object environmental model for freeway and urban roads.

Example 3 is the automotive vehicle of example 1 that may optionally include that the lane-level localization information for the vehicle is ASIL D lane-level localization information for digitized roads.

Example 4 is the automotive vehicle of example 1 that may optionally include that the one or more processors create the EM based on map data that includes a high definition (HD) map data for both freeway and urban roads.

Example 5 is the automotive vehicle of example 1 that may optionally include that the lane-level localization information is based on a GNSS and standard definition (SD) map data.

Example 6 is the automotive vehicle of example 1 that may optionally include that the EM uses a probabilistic assignment algorithm to assign lane or traffic sign designations to static or dynamic objects.

Example 7 is the automotive vehicle of example 1 that may optionally include that the one or more processors are configured to perform occupancy prediction and/or generating occupancy grids using the EM.

Example 8 is the automotive vehicle of example 1 that may optionally include that the one or more processors are configured to perform driving path planning for roads using the EM.

Example 9 is a method for use by a vehicle navigation system of an automotive vehicle, where the method includes: generating, using a first pipeline, a first set of outputs that includes traffic sign recognition results based on lane-level localization information for the vehicle; generating, using a second pipeline, a second set of outputs containing lane sensing results based on lane-level localization information for the vehicle; responsive to the first and second sets of outputs, creating an environmental model based on lane-level localization information, the traffic sign recognition results and the lane sensing results; and constructing a representation of the vehicle's surroundings for display on the interior display screen using the model.

Example 10 is the method of example 9 that may optionally include that the environmental model is a ASIL B level static object environmental model for both freeway and urban roads.

Example 11 is the method of example 9 that may optionally include that the lane-level localization information for the vehicle is ASIL D lane-level localization information for digitized roads.

Example 12 is the method of example 9 that may optionally include that creating the EM is based on map data that includes a high definition (HD) map data for both freeway and urban roads.

Example 13 is the method of example 9 that may optionally include that the lane-level localization information is based on a GNSS and standard definition (SD) map data.

Example 14 is the method of example 9 that may optionally include assigning, by the EM using a probabilistic assignment algorithm, lane or traffic sign designations to static or dynamic objects.

Example 15 is the method of example 9 that may optionally include performing occupancy prediction and/or generating occupancy grids using the EM.

Example 16 is the method of example 9 that may optionally include performing driving path planning for roads using the EM.

Example 17 is a non-transitory, computer-readable medium storing instructions that, when executed by at least one processor, cause the processor to perform a method that includes: generating, using a first pipeline, a first set of outputs that includes traffic sign recognition results based on lane-level localization information for the vehicle; generating, using a second pipeline, a second set of outputs containing lane sensing results based on lane-level localization information for the vehicle; responsive to the first and second sets of outputs, creating an environmental model based on lane-level localization information, the traffic sign recognition results and the lane sensing results; and constructing a representation of the vehicle's surroundings for display on the interior display screen using the model.

Example 18 is the non-transitory, computer-readable medium of example 17 that may optionally include that the lane-level localization information for the vehicle is ASIL D lane-level localization information for all digitized roads and wherein the EM is a ASIL B level static object environmental model.

Example 19 is the non-transitory, computer-readable medium of example 17 that may optionally include that the lane-level localization information is based on a GNSS and standard definition (SD) map data, and wherein creating the EM is based on map data that includes a high definition (HD) map data for both freeway and urban roads.

Example 20 is the non-transitory, computer-readable medium of example 17 that may optionally include that the method further comprises performing one or more of occupancy prediction, generating occupancy grids, and path planning for roads using the EM.

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component, without departing from the spirit or essential characteristics thereof. Therefore, the disclosures and descriptions herein are intended to be illustrative, but not limiting, of the scope of the invention.

Portions of what was described above may be implemented with logic circuitry such as a dedicated logic circuit or with a microcontroller or other form of processing core that executes program code instructions. Thus, processes taught by the discussion above may be performed with program code such as machine-executable instructions that cause a machine that executes these instructions to perform certain functions. In this context, a "machine" may be a machine that converts intermediate form (or "abstract") instructions into processor specific instructions (e.g., an abstract execution environment such as a "virtual machine" (e.g., a Java Virtual Machine), an interpreter, a Common Language Runtime, a high-level language virtual machine, etc.), and/or, electronic circuitry disposed on a semiconductor chip (e.g., "logic circuitry" implemented with transistors) designed to execute instructions such as a general-purpose processor and/or a special-purpose processor. Processes taught by the discussion above may also be performed by (in the alternative to a machine or in combination with a machine) electronic circuitry designed to perform the processes (or a portion thereof) without the execution of program code.

For example, the previously described embodiment operations may be stored as instructions on a non-transitory computer readable medium for execution by a controller, processor, computer, etc. The present invention also relates to an apparatus for performing the operations described herein. This apparatus may be specially constructed for the required purpose, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), RAMs, EPROMs, EEPROMs, magnetic or optical cards, or any type of media suitable for storing electronic instructions, and each coupled to a computer system bus.

A machine readable medium includes any mechanism for storing or transmitting information in a form readable by a machine (e.g., a computer). For example, a machine readable medium includes read only memory ("ROM"); random access memory ("RAM"); magnetic disk storage media; optical storage media; flash memory devices; etc.

An article of manufacture may be used to store program code. An article of manufacture that stores program code may be embodied as, but is not limited to, one or more memories (e.g., one or more flash memories, random access memories (static, dynamic or other)), optical disks, CD-ROMs, DVD ROMs, EPROMs, EEPROMs, magnetic or optical cards or other type of machine-readable media suitable for storing electronic instructions. Program code may also be downloaded from a remote computer (e.g., a server) to a requesting computer (e.g., a client) by way of data signals embodied in a propagation medium (e.g., via a communication link (e.g., a network connection)).

The preceding detailed descriptions are presented in terms of algorithms and symbolic representations of operations on data bits within a computer memory. These algorithmic descriptions and representations are the tools used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be kept in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "selecting," "determining," "receiving," "forming," "grouping," "aggregating," "generating," "removing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The processes and displays presented herein are not inherently related to any particular computer or other apparatus. Various general-purpose systems may be used with programs in accordance with the teachings herein, or it may prove convenient to construct a more specialized apparatus to perform the operations described. The required structure for a variety of these systems will be evident from the description below. In addition, the present invention is not described with reference to any particular programming language. It will be appreciated that a variety of programming languages may be used to implement the teachings of the invention as described herein.

The foregoing discussion merely describes some exemplary embodiments of the present invention. One skilled in the art will readily recognize from such discussion, the accompanying drawings and the claims that various modifications can be made without departing from the spirit and scope of the invention.

The following examples are illustrative only and may be combined with other examples or teachings described herein, without limitation.

## Claims

1. An automotive vehicle, comprising:
an interior display screen;
a vehicle navigation system having a memory and one or more processors, the one or more processors configured to:
generate, using a first pipeline, a first set of outputs that includes traffic sign recognition results based on lane-level localization information for the vehicle;
generate, using a second pipeline, a second set of outputs containing lane sensing results based on lane-level localization information for the vehicle;
responsive to the first and second sets of outputs, create an environmental model (EM) based on lane-level localization information, the traffic sign recognition results and the lane sensing results; and
construct a representation of the vehicle's surroundings for display on the interior display screen using the model.

2. The vehicle of claim 1 wherein the environmental model is a ASIL B level static object environmental model for freeway and urban roads.

3. The vehicle of claim 1 wherein the lane-level localization information for the vehicle is ASIL D lane-level localization information for digitized roads.

4. The vehicle of claim 1 wherein the one or more processors create the EM based on map data that includes a high definition (HD) map data for both freeway and urban roads.

5. The vehicle of claim 1 wherein the lane-level localization information is based on a GNSS and standard definition (SD) map data.

6. The vehicle of claim 1 wherein the EM uses a probabilistic assignment algorithm to assign lane or traffic sign designations to static or dynamic objects.

7. The automotive vehicle of claim 1 wherein the one or more processors are configured to perform occupancy prediction and/or generating occupancy grids using the EM.

8. The automotive vehicle of claim 1 wherein the one or more processors are configured to perform driving path planning for roads using the EM.

9. A method for use by a vehicle navigation system of an automotive vehicle, the method comprising:
generating, using a first pipeline, a first set of outputs that includes traffic sign recognition results based on lane-level localization information for the vehicle;
generating, using a second pipeline, a second set of outputs containing lane sensing results based on lane-level localization information for the vehicle;
responsive to the first and second sets of outputs, creating an environmental model based on lane-level localization information, the traffic sign recognition results and the lane sensing results; and
constructing a representation of the vehicle's surroundings for display on the interior display screen using the model.

10. The method of claim 9 wherein the environmental model is a ASIL B level static object environmental model for both freeway and urban roads.

11. The method of claim 9 wherein the lane-level localization information for the vehicle is ASIL D lane-level localization information for digitized roads.

12. The method of claim 9 wherein creating the EM is based on map data that includes a high definition (HD) map data for both freeway and urban roads.

13. The method of claim 9 wherein the lane-level localization information is based on a GNSS and standard definition (SD) map data.

14. The method of claim 9 further comprising assigning, by the EM using a probabilistic assignment algorithm, lane or traffic sign designations to static or dynamic objects.

15. The method of claim 9 further comprising performing occupancy prediction and/or generating occupancy grids using the EM.

16. The method of claim 9 further comprising performing driving path planning for roads using the EM.

17. A non-transitory, computer-readable medium storing instructions that, when executed by at least one processor, cause the processor to perform a method comprising:
generating, using a first pipeline, a first set of outputs that includes traffic sign recognition results based on lane-level localization information for the vehicle;
generating, using a second pipeline, a second set of outputs containing lane sensing results based on lane-level localization information for the vehicle;
responsive to the first and second sets of outputs, creating an environmental model based on lane-level localization information, the traffic sign recognition results and the lane sensing results; and
constructing a representation of the vehicle's surroundings for display on the interior display screen using the model.

18. The non-transitory, computer-readable medium of claim 17 wherein the lane-level localization information for the vehicle is ASIL D lane-level localization information for all digitized roads and wherein the EM is a ASIL B level static object environmental model.

19. The non-transitory, computer-readable medium of claim 17 wherein the lane-level localization information is based on a GNSS and standard definition (SD) map data, and wherein creating the EM is based on map data that includes a high definition (HD) map data for both freeway and urban roads.

20. The non-transitory, computer-readable medium of claim 17 wherein the method further comprises performing one or more of occupancy prediction, generating occupancy grids, and path planning for roads using the EM.
